# EUROPÄISCHE PATENTSCHRIFT

(11) **EP 2 842 985 B1**
(45) Veröffentlichungstag und Bekanntmachung des Hinweises auf die Patenterteilung: **26.12.2018**
(21) Anmeldenummer: 14182994.5
(22) Anmeldetag: 01.09.2014
(51) Int. Cl.: C08G 81/02, C08G 63/91

(54) **VERFAHREN ZUR HERSTELLUNG VON ACRYLATMODIFIZIERTEM ALKYDHARZ**
METHOD FOR THE PREPARATION OF ACRYLATE MODIFIED ALKYD RESIN
PROCÉDÉ DE FABRICATION DE RÉSINE ALKYDE MODIFIÉE PAR ACRYLATE

(30) Priorität: 30.08.2013 DE 102013109508
(43) Veröffentlichungstag der Anmeldung: 04.03.2015
(73) Patentinhaber: SYNTHOPOL CHEMIE Dr. rer. pol. Koch GmbH & CO. KG, 21614 Buxtehude (DE)
(72) Erfinder: Konrad, Matthias, 22041 Hamburg (DE)
(74) Vertreter: Müller Schupfner & Partner Patent- und Rechtsanwaltspartnerschaft mbB

(56) Entgegenhaltungen:
- EP-A1- 1 207 173
- EP-A2- 0 029 145
- EP-A2- 1 247 823

## Beschreibung

Die vorliegende Erfindung betrifft ein Verfahren zur Herstellung von mit Wasser verdünnbaren Kern-Schale-Bindemitteln in Form von acrylatmodifizierten Alkydharzen unter Verzicht auf aromatische Lösungsmittel, nach diesem Verfahren hergestellte acrylatmodifizierte Alkydharze und die Verwendung als Bindemittel in wasserverdünnbaren Lacken oder als Bindemittel in Druck- und Schreibtinten.

Mit Wasser verdünnbare Bindemittel auf Basis von acrylatmodifiziertem Alkydharz sind als Basis für hochwertige luft- und ofentrocknende wasserverdünnbare Lacke geeignet, welche durch übliche Verfahren aufgebracht werden können. Sie zeichnen sich insbesondere durch gute Langzeitstabilität auch bei Temperaturen aus, wie sie in Gebieten außerhalb der gemäßigten Klimazonen anzutreffen sind. Ferner weisen sie eine gute Trocknungsfähigkeit sowie gute Filmeigenschaften auf.

Gemäß US 4010126 A bzw. US 3600345 A besteht ein gängiger Weg zur Herstellung von acrylatmodifizierten Alkydharzen darin, ein Acrylatharz in Gegenwart eines Alkydharzes, das Hydroxygruppen enthält, aufzubauen und mit dem so entstehenden Acrylatharz, das eine hohe Säurezahl aufweist, zu verestern.

Die Acrylat-Modifizierung von Alkydharz kann gemäß US 2890185 A1 einerseits als Schmelzverfahren, andererseits als Azeotrop-Verfahren, auch Lösungsmittelverfahren genannt, durchgeführt werden.

Beim Schmelzverfahren wird die Reaktion bei einer Temperatur von 200 °C bis 260 °C durchgeführt, wobei der eingesetzte Inertgasstrom das bei der Veresterung entstehende Kondenswasser aus der Reaktionsmischung entfernt. Dieses Verfahren hat den Nachteil, dass es relativ langsam abläuft. Insbesondere kann es dabei aber leicht zu Nebenreaktionen kommen, welche beispielsweise eine unerwünschte Dunkelverfärbung des Endproduktes zur Folge haben können.

Ein Schmelzverfahren zur Herstellung von acrylatmodifizierten Alkydharzen offenbart DE 912752 C. Bei diesem Verfahren werden niedrigmolekulare Polymerisate oder Mischpolymerisate von Estern aus gegebenenfalls α-substituierten Ethylcarbonsäuren und einwertigen Alkoholen und Mono- oder Diester aus Ölfettsäuren und mehrwertigen Alkoholen mit einer oder mehreren mehrbasischen organischen Säuren bzw. deren Anhydriden erhitzt. Allerdings erfolgt die Zugabe der mehrbasischen organischen Säuren bzw. deren Anhydriden zu einem Zeitpunkt, bei dem das Gemisch aus Polymerisat und Fettsäureester noch inhomogen ist. Bei diesem Verfahren wird das Alkydharz damit erst in Gegenwart des Polyacrylats gebildet.

Beim Azeotropverfahren wird die Veresterung in Gegenwart einer geringen Menge an wasserunlöslichem Azeotrop-Lösungsmittel durchgeführt. Ein Azeotrop-Lösungsmittel muss chemisch inert sein und sollte ferner eine gute Lösekraft gegenüber Substanzen sehr unterschiedlicher Polarität besitzen, weshalb in der Praxis aromatische Lösungsmittel eingesetzt werden, üblicherweise Xylol. Das Verfahren wird unter kontinuierlicher azeotroper Destillation des Lösungsmittels durchgeführt. Dabei kondensiert die Dampfmischung aus aromatischem Lösungsmittel wie Xylol und Wasser, das Wasser wird abgetrennt und das organische Destillat fließt in das Reaktionsgefäß zurück. Das Azeotropverfahren ermöglicht zwar eine höhere Geschwindigkeit der Veresterung als das Schmelzverfahren, allerdings weisen die dabei eingesetzten aromatischen Lösungsmittel den Nachteil auf, dass sie gesundheitsschädlich sind. So ist beispielsweise Xylol in entsprechenden Konzentrationen gesundheitsschädigend bei der Aufnahme über die Haut und die Atemwege. Das aromatische Lösungsmittel muss daher nach einem entsprechenden Fertigungsschritt durch Destillation entfernt werden. Allerdings kann eine Destillation nie komplett erfolgen, sodass immer gewisse Mengen im Produkt verbleiben. Gegebenenfalls sehr hohe Anforderungen bezüglich des Gehalts an aromatischem Lösungsmittel können daher nicht erfüllt werden. Solche hohen Anforderungen sind mitunter im Malerlackbereich anzutreffen, sodass dort selbst eine relativ geringe Menge von Xylol in Höhe von ca. 0,1 - 1 Gew.-% bezogen auf die nichtflüchtigen Bestandteile des acrylatmodifizierten Alkydharzes ein Ausschlusskriterium darstellt. Beispielsweise sehen die Kriterien des sog. "Nordic Swan" einen sehr geringen Aromatengehalt (sog. "VAC", volatile aromatic content) von maximal 0,1 Gew.-% vor. Solche niedrigen Werte sind zwar destillativ möglich, erfordern aber einen hohen apparativen Aufwand.

Das Azeotropverfahren wird beispielsweise in EP 0029145 A2 angewendet. Diese Anmeldeschrift offenbart ein Verfahren zur Herstellung von wässrigen Emulsionen für luft- und ofentrocknende Lacke auf der Basis von Polyethylenglykolmodifizierten Alkydharzen mit verbesserter Langzeitstabilität.

Bei diesem Verfahren werden Fettsäureester, welche etherartig gebundene Polyethylenglykolreste aufweisen, mit üblichen Alkydharzrohstoffen unter Azeotropkreislauf mit Xylol zu einem Alkydharzvorprodukt umgesetzt, welche in einer weiteren Verfahrensstufe mit einem sauren Methacrylsäure- und Ölfettsäurereste enthaltenden Vinylcopolymerisat verestert werden. Zur Beschleunigung der Veresterung des Alkydharzvorprodukts mit eben genanntem Vinylcopolymerisat können geringe Mengen Xylol als azeotropes Schleppmittel zugesetzt werden.

Das Produkt der Umsetzung mit dem Copolymerisat wird anschließend unter Neutralisation der Carboxylgruppen mit Ammoniak oder Aminen und unter Zusatz von organischen Hilfslösungsmitteln in Wasser emulgiert. Es erhält seine guten Stabilitätseigenschaften trotz eines relativ niedrigen Polyglykolanteiles von 3 bis 8 % durch den weitgehend unverseifbaren Anteil der stabilisierenden Gruppen.

In DE 2416658 A1 führt die Neutralisation von mit Acryl- oder Methacrylsäure modifizierten Acrylharzen zu in Wasser löslichen oder dispergierbaren Alkydharzen, die insbesondere für die Herstellung von Wasserfarben geeignet sind.

Wie DE 1218642 B zeigt, kann die Neutralisation und infolgedessen Löslichmachung in Wasser von ölmodifizierten Alkydharzen beispielsweise durch bestimmte Aminoethanole bzw. -propanole erfolgen.

Ausgehend vom Stand der Technik liegt der vorliegenden Erfindung die Aufgabe zugrunde, ein Verfahren zur Herstellung von acrylatmodifizierten Alkydharzen bereitzustellen, bei dem die Veresterung des Alkydharzes mit dem Acrylatharz unter Verzicht auf aromatische Lösungsmittel, wie z.B. Xylol, durchgeführt werden kann und ohne dass die Gefahr der Bildung von Nebenprodukten besteht.

Diese Aufgabe wird durch das Azeotrop-Verfahren gelöst, wobei das Verfahren zur Herstellung von acrylatmodifiziertem Alkydharz die folgenden Schritte umfasst: Bereitstellen einer Reaktionsmischung mit einer Säurezahl von größer 55, vorzugsweise größer 70 gKOH/kg, enthaltend
a) hydroxylgruppenhaltiges Alkydharz mit einer Säurezahl von kleiner 15 g KOH/kg und einer Hydroxylzahl von 30 bis 200 g KOH/kg, vorzugsweise 50 bis 160 g KOH/kg,
b) Acrylatharz, das eine Säurezahl von 130 bis 260, vorzugsweise 190 bis 220 g KOH/kg, aufweist und
c) 2 bis 15 Gew.-%, vorzugsweise 4 bis 8 Gew.-%, eines nicht-aromatischen Esters mit einem Siedepunkt von kleiner 200°C, vorzugsweise kleiner 180°C, bei Normdruck als Lösungsmittel und Schleppmittel, vorzugsweise Butylacetat oder Butylpropionat, umsetzen der Reaktionsmischung bei einer Temperatur von 170 bis kleiner 220°C, unter Erhalt des acrylatmodifizierten Alkydharzes mit
   - einer relativ um mindestens 5 Einheiten, vorzugsweise um mindestens 10, insbesondere mindestens 20, gegenüber der Reaktionsmischung reduzierten Säurezahl und
   - einer absoluten Säurezahl von kleiner 65 g KOH/kg, vorzugsweise kleiner 50 g KOH/kg und insbesondere bevorzugt größer 30 bis kleiner 45 g KOH/kg, durch Veresterung unter Azeotropdestillation des nicht-aromatischen Esters,
wobei die angegebene Säurezahl bzw. Hydroxylzahl sich jeweils auf die nichtflüchtigen Bestandteile des Harzes bzw. der Harze bezieht. Bevorzugte Ausführungsformen sind Gegenstand der Unteransprüche oder nachfolgend beschrieben. Bereitstellen einer Reaktionsmischung umfasst auch, dass die Reaktionsmischung hinsichtlich der Konzentration von a) bis c) nur zeitweilig vorliegt, weil z.B. die Konzentration, z.B. durch Entfernen, des nicht-aromatischen Esters erst während der Umsetzung auf den erforderlichen Konzentrationsbereich eingestellt wird.
Insbesondere wird diese Aufgabe überraschenderweise dadurch gelöst, dass als Lösungsmittel und Schleppmittel der nicht-aromatische Ester mit einem Siedepunkt von < 200°C bei Normdruck eingesetzt wird, vorzugsweise Butylacetat oder Butylpropionat, insbesondere Butylacetat.

Die nicht-aromatischen Ester weisen gegenüber aromatischen Lösungsmitteln zahlreiche Vorteile auf.

Sie haben zum einen den Vorteil, dass sie ein deutlich geringeres gesundheitsgefährdendes Potential aufweisen als aromatische Lösungsmittel. Daher ist das Einsatzgebiet von acrylatmodifizierten Alkydharzen, die aus einer erfindungsgemäßen Veresterung des Alkydharzes unter Verwendung von z.B. Butylacetat hervorgehen, breiter als jenes von entsprechenden Harzen, die aus einer Veresterungsreaktion unter Verwendung von aromatischen Lösungsmitteln hervorgehen. Beispielsweise eignen sie sich dementsprechend auch für den Einsatz im Malerlackbereich.

Zum anderen weisen die nicht-aromatischen Ester, wie zum Beispiel Butylacetat, einen niedrigeren Siedepunkt und infolgedessen einen höheren Dampfdruck als die üblicherweise eingesetzten aromatischen Lösungsmittel, wie insbesondere Xylol, auf. Solche Ester lassen sich somit vergleichsweise leicht abdestillieren. Folglich kann das Produkt auch in höherer Reinheit, d.h. mit einem geringeren Anteil an restlichem Lösungsmittel, hergestellt werden. Der Vorteil der geringeren Toxizität wird dadurch noch verstärkt. Wenn andererseits im konkreten Anwendungsfall eine höhere Restmenge an nicht-aromatischem Ester wie Butylacetat akzeptiert werden kann, beispielsweise 1,0 Gew.-% oder mehr gegenüber 0,1 Gew.-% oder weniger, bezogen auf die nichtflüchtigen Bestandteile des acrylatmodifizierten Alkydharzes, so kann der apparative Aufwand und/oder die zeitlicher Dauer der Destillation gegenüber Xylol verringert werden.

Der im acrylatmodifizierten Alkydharz enthaltene verbleibende Rest an nicht-aromatischem Ester fungiert ferner als Lösungsvermittler und/oder Weichmacher, insbesondere im Bezug auf den Acrylatanteil. Unter dem Begriff "Lösungsvermittler" sind in der vorliegenden Anmeldung organische Lösungsmittel zu verstehen, in welchen das acrylatmodifizierte Alkydharz sowohl in neutralisiertem Zustand als auch in nicht neutralisiertem Zustand löslich ist. Dieser Rest an nicht-aromatischem Ester erleichtert die Lösung und/oder Dispergierung des hergestellten Alkydharzes in Wasser. Beim Auftragen einer fertigen Lackformulierung auf Basis des acrylatmodifizierten Alkydharzes auf ein Substrat können dem nicht-aromatischen Ester demnach unterstützende Eigenschaften bei der Filmbildung zugesprochen werden.

Wegen der hohen Lösekraft der nicht-aromatischen Ester, wie insbesondere von Butylacetat, verläuft die erfindungsgemäße Veresterung des Alkydharzes zum acrylatmodifizierten Alkydharz ferner häufig mit einer höheren Reaktionsgeschwindigkeit als die entsprechende Veresterung unter Verwendung von aromatischen Lösungsmitteln, wie z.B. Xylol.
Die nicht-aromatischen Ester sind keine inerten Lösungsmittel und rufen bei Veresterungsreaktionen üblicherweise als Nebenreaktion unerwünschte Umesterungen hervor. Es wurde allerdings festgestellt, dass solche Umesterungen überraschenderweise weitgehend vermieden werden können, wenn zum einen (i) die Azeotrop-Destillation des nicht-aromatischen Esters bei einer Temperatur vor 170 bis kleiner 220 °C durchgeführt wird, und zum anderen (ii) die Reaktionsmischung bei der Veresterung unter Azeotropdestillation und weitgehender Vermeidung des Abbaus der Kettenstruktur des Acrylatharzes und Alkydharzes mit einer relativ um mindestens 5 Einheiten, vorzugsweise um mindestens 10, insbesondere mindestens 20 gegenüber der Reaktionsmischung reduzierten Säurezahl, und unter Erhalt einer absoluten Säurezahl von kleiner 65 gKOH/kg, vorzugsweise kleiner 50 gKOH/kg und insbesondere bevorzugt größer 30 bis kleiner 45 gKOH/kg umgesetzt wird, und vorzugsweise weiterhin (iii) der Veresterungsschritt unter Einhaltung der beiden o.g. Kriterien in einer relativ kurzen Zeitspanne (vorzugsweise unterhalb von 1 Stunde) durchgeführt werden kann.
In der vorliegenden Anmeldung beziehen sich Säurezahlen bzw. Hydroxylzahlen stets jeweils auf die nichtflüchtigen Bestandteile des Harzes bzw. der Harze.
In der vorliegenden Anmeldung werden die nichtflüchtigen Anteile, d.h. die Anteile an nichtflüchtigen Bestandteilen, stets gemäß DIN EN ISO 3251 bestimmt.
Die Bestimmung der Säurezahl eines Harzes erfolgt im Rahmen dieser Anmeldung stets nach einem Verfahren gemäß DIN EN ISO 2114. Dabei werden ca. 5g einer Harzprobe in 30 bis 50 ml eines Lösungsmittelgemisches aus Ethanol und Xylol im Volumenverhältnis 1:2 gelöst. Diese Lösung wird dann mit einer 0,1-molaren methanolischen Kaliumhydroxid-Lösung titriert. Als Indikator fungiert Phenolphthalein oder Bromthymolblau.

Im Vergleich zum Schmelzverfahren weist das erfindungsgemäße Azeotrop-Verfahren somit ferner den beachtlichen und ebenso unerwarteten Vorteil auf, dass es ein acrylatmodifiziertes Alkydharz bereitstellt, das (nahezu) keine Nebenprodukte enthält.

Die Erfindung betrifft ferner acrylatmodifiziertes Alkydharz, das gemäß dem erfindungsgemäßen Verfahren herstellbar ist.

Das erfindungsgemäße acrylatmodifizierte Alkydharz zeichnet sich beispielsweise durch eine geringe Dunkelvergilbung, aufgrund des (nahezu) Ausbleibens von Nebenprodukten bei dessen Herstellung, sowie gute Beständigkeiten gegen Witterung, Chemikalien und korrosive Umgebungseinflüsse aus. Weiterhin weist es eine gute Pigment- und Substratbenetzung auf.

Ferner betrifft die Erfindung die Verwendung des erfindungsgemäßen acrylatmodifizierten Alkydharzes als Bindemittel in wasserverdünnbaren Lacken.

So werden die Bindemittel in einem großen Spektrum von Anwendungen eingesetzt, z.B. als wasserbasierte Malerlacke, als Holzpflege-"Öle" und als Lasuren, sowohl für das professionelle Malergewerbe, als auch in den entsprechenden "Doit-yourself"-Produkten. Andererseits können auch viele industrielle Anwendungen abgedeckt werden, wie insbesondere die Verwendung in Grundierungen, Deck- und Einschichtlacken sowie als Füller. Als Untergrund sind sowohl Holz und Metall, als auch viele andere Untergründe, wie beispielsweise Kunststoffe oder typische anorganische Baustoffe, möglich. Demnach können Bautenteile, Möbel, Maschinen und viele andere Gegenstände des alltäglichen Gebrauchs beschichtet werden.

Die erfindungsgemäßen acrylatmodifizierten Alkydharze können ferner als Bindemittel in wasserbasierten Druck- und Schreibtinten oder als Additiv in Klebstoffsystemen eingesetzt werden.

### Eingesetztes Alkydharz

Unter "Alkydharze" werden erfindungsgemäß Polyester verstanden, die unter Verwendung von Monocarbonsäuren typischerweise mit 5 bis 22 Kohlenstoffatomen, bzw. deren Derivate, hergestellt sind, insbesondere Fettsäuren.

Die erfindungsgemäß eingesetzten Alkydharze haben nur kleine Säurezahlen von weniger als 15 gKOH/kg, insbesondere weniger als 10 gKOH/kg, und weisen Hydroxylzahlen von 30 bis 200 gKOH/kg, vorzugsweise 50 bis 160 gKOH/kg und insbesondere 80 bis 130 gKOH/kg auf.

Die Bestimmung der Hydroxylzahl eines Harzes erfolgt im Rahmen dieser Anmeldung stets nach einem Verfahren gemäß DIN 53240.

Die Alkydharze können z.B. nach dem Fettsäureverfahren oder dem Triglyceridverfahren hergestellt werden.

Im Fettsäureverfahren werden die Alkydharze in einem Eintopf-Verfahren durch die Polykondensation von mehrwertigen Alkoholen, sogenannter Polyole, mit Polycarbonsäure-Verbindungen in Gegenwart zumindest von gesättigter und/oder ungesättigter Fettsäure bzw. einem Anhydrid davon, erhalten. Unter Polycarbonsäure-Verbindungen sind in der vorliegenden Anmeldung mehrwertige Carbonsäuren, d.h. Polycarbonsäuren, Anhydride solcher Carbonsäuren, Ester solcher Carbonsäuren oder Mischungen davon, zu verstehen. Vorzugsweise sind darunter Polycarbonsäuren und/oder Anhydride solcher Carbonsäuren zu verstehen. Im Fettsäureverfahren kann ein Säurekatalysator eingesetzt werden, wie z.B. p-Toluolsulfonsäure.

Alternativ können die Alkydharze nach dem Triglyceridverfahren erhalten werden, das ein zweistufiges Verfahren darstellt. Dabei wird in einer ersten Stufe gesättigte und/oder ungesättigte Fettsäure eines Esters, üblicherweise die Fettsäure eines Öls, d.h. eines Triglycerids, im Allgemeinen in Gegenwart eines Katalysators, wie zum Beispiel Bleioxid (PbO), Lithiumhydroxid (LiOH), Zinkacetat, Calciumhydroxid (Ca(OH)₂) und/oder Calciumseife, umgeestert.

Üblicherweise erfolgt dies durch Zugabe von 2 Äquivalenten Glycerin zum eingesetzten Triglycerid. Anschließend werden in einer zweiten Stufe weitere Polycarbonsäure-Verbindungen, insbesondere Polycarbonsäure und/oder Polycarbonsäureanhydrid, und ggf. weiteres Polyol hinzugefügt und die Polykondensation wird durchgeführt. Wie im Fettsäureverfahren kann auch in diesem Polykondensationsschritt ein Säurekatalysator eingesetzt werden, wie z.B. *p*-Toluolsulfonsäure.

Das Fettsäureverfahren und die zweite Stufe des Triglyceridverfahrens laufen in der Regel bei Temperaturen zwischen 180 - 260 °C ab. In der ersten Stufe des Triglyceridverfahrens werden tendenziell etwas höhere Temperaturen verwendet, d.h. etwa 230 - 260 °C. In beiden Fällen wird in der Regel mit Schutzgas, üblicherweise mit Stickstoff, gearbeitet, um die oxidationsempfindlichen Fettsäuren vor Verfärbung zu schützen.

Die erste Stufe des Triglyceridverfahrens wird in der Regel lösungsmittelfrei durchgeführt.

Für die zweite Stufe des Triglyceridverfahrens und das Fettsäureverfahren gibt es zwei verschiedene Verfahrensvarianten, um das bei der Veresterung anfallende Kondensationswasser aus dem Reaktionsgleichgewicht zu entfernen, nämlich das Schmelzverfahren und das Azeotrop-Verfahren.

Im Schmelzverfahren wird unter Verzicht auf aromatische Lösungsmittel gearbeitet und allein der anliegende Schutzgasstrom, in der Regel Stickstoffstrom, sorgt dafür, dass das Kondensationswasser aus dem Reaktor getrieben wird. Dies ermöglicht die Herstellung von Alkydharz, das frei von aromatischen Lösungsmitteln wie z.B. Xylol ist. Daher wird das erfindungsgemäß eingesetzte Alkydharz vorzugsweise jeweils durch Veresterung unter Anwendung des Schmelzverfahrens hergestellt.

Beim Azeotrop-Verfahren wird den Ausgangsstoffen der Polykondensation zusätzlich in Wasser unlösliches Lösungsmittel hinzugefügt, üblicherweise 2 - 15 Gew.-%, vorzugsweise 4 - 8 Gew.-%, bezogen auf das Gesamtgewicht der sich ergebenden Reaktionsmischung.

Das Lösungsmittel fungiert dann als Schleppmittel. Die Reaktionstemperatur entspricht im Azeotrop-Verfahren der Siedetemperatur des Lösungsmittels in der Reaktionsmischung. Die Reaktionstemperatur wird somit durch den Siedepunkt des jeweiligen reinen Lösungsmittels sowie dessen Gehalt in der Reaktionsmischung bestimmt. Je höher der Lösungsmittelanteil, desto niedriger ist die erforderliche Verfahrenstemperatur.

Das Lösungsmittel befindet sich bei der jeweiligen Reaktionstemperatur im Kreislauf, d.h. es verdampft ständig, kondensiert dann im Kühler und läuft über eine sogenannte Trennvorlage in den Reaktor zurück. Das Kondensationswasser kondensiert ebenfalls in die Trennvorlage, trennt sich dort aber vom Lösungsmittel und läuft nicht mehr in den Reaktor zurück.

Um die gewünschte Säurezahl des erfindungsgemäß eingesetzten Alkydharzes, welches wie erwähnt insbesondere im Schmelzverfahren hergestellt wird, zu erreichen, wird die Polykondensation so lange vorangetrieben, bis eine Probe aus der Reaktionsmischung die Säurezahl von weniger als 15 gKOH/kg, insbesondere weniger als 10 gKOH/kg aufweist. Die gewünschte Hydroxylzahl des resultierenden Alkydharzes lässt sich über die Menge und Zusammensetzung der eingesetzten Edukte sowie die Säurezahl des resultierenden Alkydharzes einstellen. Nachdem die gewünschte Säurezahl und Hydroxylzahl erreicht ist, wird die Reaktionsmischung gekühlt und das Produkt wird vorzugsweise durch Zugabe des nicht-aromatischen Esters, wie z.B. Butylacetat, angelöst.

Bei der Herstellung des hydroxylgruppenhaltigen Alkydharzes wird weiterhin ein Polyol oder ein Polyol-Gemisch, vorzugsweise mit im Mittel größer 2 bis 6 Hydroxyl-Gruppen, insbesondere größer 2 bis 4 Hydroxylgruppen, eingesetzt.

Zweiwertige Polyole sind vorzugsweise ausgewählt aus der Gruppe bestehend aus Ethylenglykol, Diethylenglykol, Propylenglykol, 1,4-Cyclohexandimethanol, und Neopentylglykol, wobei Neopentylglykol besonders bevorzugt ist. Dreiwertige Polyole sind vorzugsweise aus der Gruppe bestehend aus Glycerin und Trimethylolpropan ausgewählt. Als vierwertiges Polyol wird beispielsweise Di-Trimethylolpropan oder Pentaerythrit verwendet, vorzugsweise Pentaerythrit. Besonders bevorzugt wird als Polyol Neopentylglykol, Glycerin, Trimethylolpropan, Pentaerythrit oder eine Mischung davon eingesetzt.

Ferner sind als Polyol Dipentaerythrit, Kohlenhydrate bzw. deren Derivate einsetzbar, insbesondere in einem Gemisch mit anderen niederwertigeren Polyolen. Weiterhin ist es möglich, einen begrenzten Anteil von maximal 40 mol-% des Polyols bzw. des Polyol-Gemischs durch ein Epoxidharz zu ersetzen.

Als Polycarbonsäure-Verbindungen werden vorzugsweise Di- und/oder Tricarbonsäuren, Anhydride solcher Carbonsäuren, Ester solcher Carbonsäuren oder eine Mischung davon eingesetzt. Es werden besonders bevorzugt Dicarbonsäuren, Anhydride solcher Carbonsäuren, Ester solcher Carbonsäuren oder eine Mischung davon eingesetzt. Dabei wird insbesondere ortho-Phthalsäure, ortho-Phthalsäureanhydrid, Isophthalsäure, Terephthalsäure, Tetrahydro-Phthalsäureanhydrid, Hexahydrophthalsäureanhydrid oder eine Mischung davon eingesetz. Als Tricarbonsäure-Verbindung ist Trimellitsäureanhydrid bevorzugt.

Als Alternative oder als Zusatz zu Di- bzw. Tricarbonsäure-Verbindungen können aber auch Tetracarbonsäure-Verbindungen eingesetzt werden.

Den eben genannten Carbonsäuren-Verbindungen unterschiedlicher Wertigkeit können weitere Dicarbonsäure-Verbindungen zugesetzt werden, insbesondere Maleinsäureanhydrid, Adipinsäure, Azelainsäure oder eine Mischung davon.

Ferner werden bei der Herstellung der Alkydharze vorzugsweise ein oder mehrere ungesättigte nicht cyclische aliphatische Monocarbonsäure-Verbindungen mit 5 bis 22 Kohlenstoffatomen (gleich Fettsäure) im Säurerest eingesetzt. In der vorliegenden Anmeldung sind unter Monocarbonsäure-Verbindungen Monocarbonsäuren, deren Anhydrid, deren Ester oder Mischungen davon, gemeint. Unter "Säurerest" einer Monocarbonsäure-Verbindung ist in der vorliegenden Erfindung (i) die eingesetzte Säure als solche gemeint, falls als Monocarbonsäure-Verbindung eine Monocarbonsäure eingesetzt wird, oder (ii) der davon abgeleitete Baustein, falls als Monocarbonsäure-Verbindung ein Anhydrid oder Ester einer Monocarbonsäure eingesetzt wird. Demzufolge werden vorzugsweise ein oder mehrere ungesättigte Fettsäuren, deren Anhydride, deren Ester oder Mischungen davon, eingesetzt.

Bei der Herstellung der Alkydharze können weitere Verbindungen eingesetzt werden. Insbesondere können ein oder mehrere gesättigte, nicht cyclische aliphatische Monocarbonsäure-Verbindungen mit 5 bis 22 Kohlenstoffatomen (ebenfalls gleich Fettsäure) im Säurerest, d.h. gesättigte Fettsäuren bzw. deren Anhydride oder Ester, und/oder eine aromatische oder cycloaliphatische Monocarbonsäure-Verbindung, insbesondere Benzoesäure, oder Mischungen davon, eingesetzt werden.

Als Fettsäuren werden insbesondere solche eingesetzt, die von pflanzlichen Ölen abgeleitet sind, d.h. insbesondere von Kastoröl, d.h. Rizinusöl, dehydratisiertem Kastoröl, Baumwollsaatöl, Rapsöl, Kokosnussöl, Leinsamenöl, Olivenöl, Palmöl, Erdnussöl, Diestelöl, Sojaöl, Sonnenblumenöl, Tallöl, Tungöl oder einer Mischung davon. Besonders bevorzugt werden Fettsäuremischungen eingesetzt, deren Anteile mit jenen des entsprechenden pflanzlichen Öls korrelieren. Von Sojaöl, Sonnenblumenöl, Tallöl und/oder Leinöl abgeleitete Fettsäuren sind besonders bevorzugt.

Dementsprechend werden als Fettsäure vorzugsweise Caprylsäure, Caprinsäure, Laurinsäure, Myristinsäure, Palmitinsäure, Stearinsäure, Ölsäure, Linolsäure, Linolensäure, Eleostearinsäure, Ricinolsäure, Arachinsäure oder einer Mischung davon eingesetzt.

Daneben können auch weitere gesättigte und/oder (mehrfach) ungesättigte Fettsäuren tierischen, synthetischen oder halbsynthetischen Ursprungs eingesetzt werden.

Als Fettsäureester werden vorzugsweise pflanzliche Öle eingesetzt, insbesondere eines der vorstehend genannten pflanzlichen Öle oder eine Mischung davon. Das heißt, dass insbesondere Kastoröl, d.h. Rizinusöl, dehydratisiertes Kastoröl, Baumwollsaatöl, Rapsöl, Kokosnussöl, Leinsamenöl, Olivenöl, Palmöl, Erdnussöl, Diestelöl, Sojaöl, Sonnenblumenöl, Tungöl oder eine Mischung davon, eingesetzt wird, zum Beispiel Sojaöl, Sonnenblumenöl und/oder Leinöl.

### Eingesetztes Acrylatharz

Unter Acrylatharz, auch Acrylharz genannt, versteht man im Allgemeinen thermoplastische oder wärmehärtbare synthetische Harze, die durch Homo- oder Copolymerisation von (Meth)acrylsäureestern gewonnen werden.

Unter (Meth)acrylsäureestern sind in der vorliegenden Anmeldung sowohl Methacrylsäureester, als auch Acrylsäureester gemeint.

Die im erfindungsgemäßen Verfahren eingesetzten Acrylatharze weisen Säurezahlen von 130 bis 260, vorzugsweise 190 bis 220 gKOH/kg auf. Im Allgemeinen ist eine umso höhere Säurezahl erforderlich, je geringer der Acrylatanteil im Endprodukt werden soll.

Ferner weisen die Acrylatharze üblicherweise Hydroxylzahlen von annähernd 0 gKOH/kg auf, um eine Reaktion mit sich selbst zu verhindern.

Der saure Charakter der eingesetzten Acrylatharze beruht darauf, dass diese vorzugsweise durch Copolymerisation von (Meth)acrylsäureestern mit sauren vinylischen Monomeren (worunter auch ungesättigte Fettsäuren fallen), und ggf. weiteren vinylischen Monomeren, gewonnen werden.

Als (Meth)acrylsäureester werden i. A. (Meth)acrylsäure(C1- bis C8-)alkylester, insbesondere (Meth)acrylsäuremethylester, (Meth)acrylsäurebutylester, wie (Meth)acrylsäure-n-butylester und/oder (Meth)acrylsäure-iso-butylester und/oder (Meth)acrylsäureethylhexylester, eingesetzt. Als saure vinylische Monomere werden vorzugsweise (Meth)acrylsäure und/oder ungesättigte Carbonsäuren, wie z.B. ungesättigte Fettsäuren (C5 bis C22), eingesetzt. Die Carbonsäure kann auch als Anhydrid eingesetzt werden, welches in Wasser seine Säurewirkung entfalten kann. Besonders bevorzugt wird eine Mischung aus (Meth)acrylsäure und/oder ungesättigten Fettsäuren eingesetzt. Als weitere vinylische Monomere werden vorzugsweise Styrol, Vinyltoluol, Methylstyrol und/oder Vinylester, insbesondere Vinylacetat, eingesetzt.

Die ungesättigte Carbonsäure ist einfach oder mehrfach ungesättigt, vorzugsweise zweifach oder dreifach, ggf mit konjugierten Doppelbindungen. Vorzugsweise ist sie ausgewählt aus ein oder mehreren Mitgliedern der Gruppe Ölsäure, Linolsäure, Linolensäure, Eleostearinsäure und Ricinenfettsäure. Beispielsweise kann eine Fettsäuremischung eingesetzt werden, deren Anteile mit jenen des Leinöls, Tallöls oder des Rizinens, d.h. dehydratisierten Kastoröls, korrelieren.

Der Anteil der ungesättigten Carbonsäure an der gesamten Reaktionsmischung beträgt üblicherweise etwa 10 - 50 Gew.-%, vorzugsweise 25 - 40 Gew.-%.

Bei der Polymerisation werden vorzugsweise die Monomere bzw. Carbonsäuren in dem nicht-aromatischen Ester wie oben und nachfolgend beschrieben als Lösungsmittel vorgelegt und anschließend eine Reaktionsmischung, bestehend aus den übrigen Monomeren, dem Initiator, z.B. tert-Butyl-perbenzoat, sowie einer weiteren Menge des nicht-aromatischen Esters über einen Zeitraum von 3 - 10 h, insbesondere 4,5 - 6 h kontinuierlich zudosiert.

Die Temperatur beträgt dabei vorzugsweise 120 bis 150 °C. Als Ester wird wegen der ausreichend guten Kettenübertragung und des hohen Verdünnungseffekts vorzugsweise Butylacetat verwendet. Dies ermöglicht die Herstellung von Acrylatharzen geringerer Viskosität. Vorzugsweise werden damit sowohl das Alkydharz, als auch das Acrylatharz, welche nach dem erfindungsgemäßen Verfahren zu acrylatmodifiziertem Alkydharz umgesetzt werden, unter Verzicht auf aromatische Lösungsmittel, wie zum Beispiel Xylol, hergestellt. Folglich kann auch das aus dem erfindungsgemäßen Verfahren resultierende acrylatmodifizierte Alkydharz in aromatenfreier Form hergestellt werden.

### Eingesetzter Ester

Der im erfindungsgemäßen Verfahren zur Herstellung von acrylatmodifiziertem Alkydharz eingesetzte, nicht-aromatische Ester mit einem Siedepunkt von weniger als 200 °C bei Normdruck weist als Veresterungsprodukt aus dem Alkohol R¹-OH und der Carbonsäure R²-COOH die Formel R¹-OOC-R² auf, wobei R¹ vorzugsweise ein verzweigter oder unverzweigter, aliphatischer oder cycloaliphatischer Alkylrest mit 1 bis 6 Kohlenstoffatomen, und insbesondere ein verzweigter oder unverzweigter aliphatischer Alkylrest mit 3 bis 5 Kohlenstoffatomen ist, und wobei R² vorzugsweise ein verzweigter oder unverzweigter, aliphatischer oder cycloaliphatischer Alkylrest mit 1 bis 5 Kohlenstoffatomen, und insbesondere ein verzweigter oder unverzweigter aliphatischer Alkylrest mit 2 bis 4 Kohlenstoffatomen ist. Vorzugsweise enthält der nicht-aromatische Ester insgesamt 5 bis 9 Kohlenstoffatome, insbesondere 6 bis 7 Kohlenstoffatome. Beispielsweise ist der nicht-aromatische Ester Butylacetat oder Butylpropionat.

### Ablauf des Verfahrens

Bei der erfindungsgemäßen Herstellung des acrylatmodifizierten Alkydharzes durch Veresterung unter Azeotropdestillation wird in einem ersten Schritt eine Reaktionsmischung bereitgestellt, die das hydroxylgruppenhaltige Alkydharz, das Acrylatharz und den nicht-aromatischen Ester, jeweils vorstehend beschriebener Art, enthält.

Das hydroxylgruppenhaltige Alkydharz und das Acrylatharz werden dabei vorzugsweise in einem Gewichtsverhältnis von 4: 1 bis 1: 1, bevorzugter von 3: 1 bis 1,5: 1, insbesondere 3:1 bis 2: 1 eingesetzt, bezogen auf die nichtflüchtigen Bestandteile der Harze.

Der nicht-aromatische Ester mit einem Siedepunkt von kleiner 200°C, insbesondere kleiner 180°C bei Normdruck wird als Lösungsmittel und Schleppmittel eingesetzt, und zwar in einer Menge von 2 bis 15 Gew.-%, vorzugsweise 4 bis 8 Gew.-%, bezogen auf die bereitgestellte Reaktionsmischung.
Die bereitgestellte Reaktionsmischung weist eine Säurezahl von größer 55, vorzugsweise größer 70 gKOH/kg auf.

Anschließend wird die Reaktionsmischung bei einer Temperatur 170 bis kleiner 220 °C unter Erhalt des acrylatmodifizierten Alkydharzes mit einer relativ um mindestens 5 Einheiten, vorzugsweise um mindestens 10, insbesondere mindestens 20, gegenüber der Reaktionsmischung reduzierten Säurezahl, und einer absoluten Säurezahl von kleiner 65 gKOH/kg, vorzugsweise kleiner 50 gKOH/kg und insbesondere bevorzugt größer 30 bis kleiner 45 gKOH/kg, durch Veresterung unter Azeotropdestillation umgesetzt.
Das Lösungsmittel befindet sich bei der jeweiligen Reaktionstemperatur im Kreislauf, d.h. es verdampft ständig, kondensiert dann im Kühler und läuft über eine sogenannte Trennvorlage in den Reaktor zurück. Das Kondensationswasser kondensiert ebenfalls in die Trennvorlage, trennt sich dort aber vom Lösungsmittel und läuft nicht mehr in den Reaktor zurück.
Bei dem Azeotropverfahren entspricht die Reaktionstemperatur der Siedetemperatur des Azeotrop-Lösungsmittels in der sich ergebenden Reaktionsmischung. Das Lösungsmittel fungiert dann als "Schleppmittel". Die Reaktionstemperatur wird somit durch den Siedepunkt des reinen Lösungsmittels sowie dessen Gehalt in der Reaktionsmischung bestimmt. Je höher der Lösungsmittelanteil ist, desto niedriger ist die erforderliche Reaktionstemperatur.
Wenn das eingesetzte hydroxylgruppenhaltige Alkydharz und das eingesetzte Acrylatharz weniger von dem nicht-aromatischen Ester enthalten als im Azeotropverfahren zur Herstellung des acrylatmodifizierten Alkydharzes erwünscht, so wird den eingesetzten Harzen für die azeotrope Destillation weiterer nicht-aromatischer Ester zugegeben.

Wenn das eingesetzte hydroxylgruppenhaltige Alkydharz und das eingesetzte Acrylatharz dagegen zusammen mehr von dem nicht-aromatischen Ester enthalten als im Azeotropverfahren zur Herstellung des acrylatmodifizierten Alkydharzes erwünscht, wird der in den eingesetzten Harzen enthaltene Ester teilweise entfernt, bis der gewünschte Esteranteil erreicht wird, vorzugsweise durch Abdestillieren. Beispielsweise können die eingesetzten Harze einzeln oder gemeinsam auf die im Azeotropverfahren gewünschte Reaktionstemperatur wie z.B. 200 °C erhitzt werden, wobei solange nicht-aromatischer Ester abdestilliert wird und dem System z.B. über Wasserabscheider entzogen wird, bis sich bei der gewünschten Reaktionstemperatur Rückfluss einstellt.

Wird so wenig nicht-aromatischer Ester eingesetzt, dass die Reaktionstemperatur 220 °C oder mehr beträgt, so können unerwünschte Umesterungsreaktionen stattfinden. Wird zu viel nicht-aromatischer Ester eingesetzt, d.h. mehr als 15 Gew.-% bezogen auf die bereitgestellte Reaktionsmischung, so ist die Temperatur zu niedrig, um die gewünschte Umsetzung zu erzielen. Vorzugsweise erfolgt die Umsetzung bei 170 bis 210 °C, insbesondere bei 170 °C bis 200 °C. Verwendet man beispielsweise ca. 6 Gew.-% Butylacetat als nicht-aromatischer Ester, so ergibt sich eine Reaktionstemperatur von ca. 200 °C.

Üblicherweise wird das Azeotropverfahren unter Schutzgas durchgeführt, in der Regel mit Stickstoff, um die oxidationsempfindlichen Fettsäurebausteine vor Verfärbung zu schützen

Um Umesterungen zu vermeiden, wird die Reaktionsmischung unter Erhalt eines acrylatmodifizierten Alkydharzes mit einer relativ um mindestens 5 Einheiten, vorzugsweise um mindestens 10, insbesondere mindestens 20 gegenüber der Reaktionsmischung reduzierten Säurezahl, und einer absoluten Säurezahl von kleiner 65 gKOH/kg, vorzugsweise kleiner 50 gKOH/kg und insbesondere bevorzugt größer 30 bis kleiner 45 gKOH/kg, durch Veresterung unter Azeotropdestillation des nicht-aromatischen Esters umgesetzt. Vorzugsweise wird die Veresterung durch Abkühlung der Reaktionsmischung unter Erhalt des acrylatmodifizierten Alkydharzes gestoppt, insbesondere durch Abkühlung auf eine Temperatur von unter 140°C, beispielsweise unter 120°C. Nach einer weiteren Ausführungsform wird die Reaktionsmischung vorzugsweise auf eine Temperatur abgekühlt, die mindestens 30 °C unterhalb der Siedetemperatur des Azeotrop-Lösungsmittels in der Reaktionsmischung liegt, bevorzugter mindestens 50 °C.

Das resultierende acrylatmodifizierte Alkydharz weist vorzugsweise Kaltklarheit auf. Kaltklarheit bedeutet, dass die Reaktionsmischung bei Raumtemperatur (25 °C) transparent ist.

Vorzugsweise wird der nicht-aromatische Ester anschließend teilweise entfernt, insbesondere durch Destillation wie z.B. Vakuumdestillation. Üblicherweise wird der nicht-aromatische Ester auf einen Gehalt von 0,1 bis 3 Gew.-%, insbesondere 0,2 bis 1,0 Gew.-%, nicht-aromatischer Ester im acrylatmodifizierten Alkydharz entfernt, bezogen auf die nichtflüchtigen Bestandteile des acrylatmodifizierten Alkydharzes. Dieser Rest an nicht-aromatischen Ester fungiert im Falle einer Verdünnung des Harzes mit Wasser zu einem gewissen Grad als Lösungsvermittler und/oder Weichmacher. Dies erleichtert die Lösung und/oder Dispergierung des acrylatmodifizierten Alkydharzes in Wasser und kann in der Anwendung die Bildung des Lackfilms unterstützen.

Vorzugsweise erfolgt die Destillation bei 120 bis 140 °C. In diesem Temperaturbereich ist die Destillation schneller durchführbar als bei noch geringeren Temperaturen.

Das acrylatmodifizierte Alkydharz kann, um in Wasser löslich und/oder dispergierbar gemacht zu werden, mit Base neutralisiert werden, vorzugsweise durch Umsetzung des Alkydharzes mit (1 +/-0,2) Äquivalent Base.

Dabei wird als Base vorzugsweise (a) Hydroxidsalz, insbesondere Natriumhydroxid oder Kaliumhydroxid oder (b) Amin, insbesondere 2-(Dimethylamino)-ethanol, 3-(Dimethylamino)-propanol-2, 2-(Diethylamino)-ethanol, 3-(Diethylamino)-propanol-2 oder 3-(Diethylamino)-propanol-1, oder (c) Ammoniak, eingesetzt.

Die Base wird vorzugsweise in Reinform oder in Form einer wässrigen bzw. alkoholischen Lösung eingesetzt. Die Zugabe der Base kann bei jeder Temperatur, die ein Rühren des acrylatmodifizierten Alkydharzes zulässt, durchgeführt werden. Vorzugsweise wird sie bei einer Temperatur im Bereich von 60 bis 120 °C durchgeführt. Im Einzelfall ist die Wahl der Temperatur abhängig von der Art des eingesetzten Neutralisationsmittels.

Es gilt, übermäßiges Entweichen durch zu hohe Temperatur zu vermeiden. Falls die Base in Form einer wässrigen Lösung zugegeben wird, erfolgt dies vorzugsweise bei einer Temperatur im Bereich von 50 bis 90 °C, bevorzugter 60 bis 80 °C, insbesondere 65 bis 75 °C.

Dem Alkydharz kann nach Zugabe der Base oder gleichzeitig mit der Base, d.h. in Form einer wässrigen Lösung der Base, Wasser zugegeben werden, vorzugsweise unter Einstellung eines nichtflüchtigen Anteils der sich ergebenden wässrigen Lösung und/oder Dispersion von 30 bis 70 Gew.-%, insbesondere 40 bis 50 Gew.-%. Die sich ergebende Lösung und/oder Dispersion weist als solche einen pH-Wert bei 20 °C von vorzugsweise 6 bis 10, bevorzugter 7 bis 9 und insbesondere 7,5 bis 8,7 auf.

Die wässrige Lösung und/oder Dispersion des acrylatmodifizierten Alkydharzes kann anschließend noch filtriert und/oder gereinigt werden.

Weiterhin können dem acrylatmodifizierten Alkydharz ein oder mehrere Lösungsvermittler zugegeben werden wie z.B. mono oder bis (C1- bis C4- Alkoxy)-C1 bis C6- Alkohole. Der Lösungsvermittler ist vorzugsweise ausgewählt aus der der Gruppe bestehend aus Butoxypropanol, d.h. Propylenglykol-n-Butylether, Butoxyethanol, Ethoxyethoxyethanol, Butoxyethoxyethanol, Propoxyethoxyethanol, Ethoxyethanol, Methoxypropanol, Dimethylsulfon, Dimethylsulfoxyd und n-Butanol und seinen Isomeren, und ist insbesondere Butoxypropanol.

Vorzugsweise wird er in einer Menge von 0,1 bis 20, insbesondere 1 bis 10 Gew.%, Lösungsvermittler, bezogen auf die nichtflüchtigen Bestandteile des acrylatmodifizierten Alkydharzes, zugegeben.

Der Lösungsvermittler kann dem acrylatmodifizierten Alkydharz wahlweise vor, nach, als Mischung mit oder gleichzeitig mit der Base zugegeben werden. Vorzugsweise wird er dem Harz vor der Base zugegeben. Die Zugabe des Lösungsvermittlers kann bei jeder Temperatur, die ein Rühren des acrylatmodifizierten Alkydharzes zulässt, durchgeführt werden. Vorzugsweise wird sie bei einer Temperatur im Bereich von 60 bis 120 °C durchgeführt. Dabei sollte die Siedetemperatur des Lösungsvermittlers unterschritten werden.

Nachfolgend wird die Erfindung durch die folgenden Beispiele erläutert:

### Beispiel 1a: Herstellung des hydroxylgruppenhaltigen Alkydharzes 1a) als Vorprodukt für das acrylatmodifizierte Alkydharz 1c):

Das Alkydharz wurde im Schmelzverfahren hergestellt. Dazu wurde ein 2 Liter fassender Reaktionskolben mit einem Rührwerk, Stickstoffzufuhr, einer mit Raschig-Ringen gefüllten Glaskolonne und einer Temperaturregelung versehen, wobei ein Heizpilz als Wärmequelle diente.

Die verwendeten Ausgangsstoffe waren:

| | | |
|---|---|---|
| 1 | Sojaöl-Fettsäure | 642,0 g |
| 2 | Benzoesäure | 104,0 g |
| 3 | Trimethylolpropan | 382,0 g |
| 4 | Pentaerythrit | 104,0 g |
| 5 | Tetrahydro-Phthalsäureanhydrid | 486,8 g |
| 6 | Triphenylphosphit | 1,0 g |
| 7 | Butylacetat | 400 g |

Die Ausgangsstoffe 1-6 wurden zusammengegeben und unter Rühren erhitzt. Bei 170°C wurde für eine Stunde gehalten, dann wurde weiter erhitzt auf 200°C und wieder eine Stunde gehalten.

Dann wurde auf 230°C erhitzt und bei dieser Temperatur gehalten, bis eine Säurezahl im Bereich von 0 bis maximal 10 gKOH/kg erhalten wurde. Bei einer Säurezahl von 5 gKOH/kg wurde das sich ergebende Alkydharz gekühlt und bei ca. 100°C mit etwa 90 Gew.-% von Ausgangsstoff 7 angelöst. Nach weiterem Kühlen auf Raumtemperatur wurde mit dem Rest von Ausgangsstoff 7 das Alkydharz auf einen nichtflüchtigen Anteil von 80 Gew.-% eingestellt. Anschließend wurde das Produkt filtriert und zur vorübergehenden Aufbewahrung in eine Blechdose gefüllt. Die Säurezahl des Alkydharzes (gemessen nach DIN EN ISO 2114) betrug 5 gKOH/kg, die Hydroxylzahl (nach DIN 53240) 80 gKOH/kg.

### Beispiel 1b: Herstellung des Acrylatharzes 1b) als Vorprodukt für das acrylatmodifizierte Alkydharz 1c):

Das Acrylatharz wurde nach dem Prinzip der radikalischen Polymerisation in Lösung hergestellt. Der verwendete Versuchsaufbau entspricht dem von Beispiel 1a, wobei aber an Stelle der Glaskolonne ein Rückflusskühler verwendet wurde. Außerdem wurde der Reaktionskolben mit einem Tropftrichter ausgestattet.

Die verwendeten Ausgangsstoffe waren:

| | | |
|---|---|---|
| 1 | Fettsäuren-Mischung | 477,7 g |
| 2 | Butylacetat | 160 g |
| 3 | t-butyl-Perbenzoat | 69,0 g |
| 4 | n-Butylmethacrylat | 53,7 g |
| 5 | iso-Butylmethacrylat | 375,8 g |
| 6 | Methacrylsäure | 241,2 g |
| 7 | Butylacetat | 400 g |
| 8 | Dodecylmercaptan | 1,5 g |
| 9 | Butylacetat | 360 g |
| 10 | t-Butyl-Perbenzoat | 5,0 g |
| 11 | Butylacetat | 300 g |

Die Fettsäuremischung 1, bestehend zu 55 Gew.-% aus Leinöl-Fettsäure, zu 35 Gew.-% aus Tallöl-Fettsäure und zu 10 Gew.-% aus Rizinenfettsäure, wurde im Kolben zusammen mit Ausgangsstoff 2 im Kolben vorgelegt und unter Rühren auf 130°C erhitzt. Dann wurde die Mischung, bestehend aus den Ausgangsstoffen 3 bis 8, aus dem Tropftrichter über einen Zeitraum von 5 Stunden zugegeben.

Nach Beenden des Zulaufs wurde noch ca. 30 Minuten weiter bei 130°C gerührt. Dann erhitzte man auf 140°C, gab die Ausgangsstoffe 9 und 10 zu und hielt noch ca. 4 Stunden bei 140°C. Dann wurde das sich ergebende Acrylatharz gekühlt und ca. 90 Gew.-% von Ausgangsstoff 11 zugegeben. Die Einstellung auf einen nichtflüchtigen Anteil von 60 Gew.-% erfolgte mit dem Rest an Ausgangsstoff 11. Anschließend wurde das Harz filtriert und zur vorübergehenden Aufbewahrung in eine Blechdose gefüllt. Die Säurezahl des Acrylatharzes wurde zu 210 gKOH/kg bestimmt.

### Beispiel 1c: Herstellung des Acrylat-modifizierten Alkydharzes 1c) aus dem Alkydharz 1a) und dem Acrylatharz 1b):

Der Aufbau für diesen Schritt entspricht dem aus dem Beispiel 1b, allerdings befand sich zwischen Kolben und Rückflusskühler noch ein Wasserabscheider nach Dean-Stark. Die verwendeten Ausgangsstoffe waren:

| | | |
|---|---|---|
| 1 | Alkydharz-Vorprodukt 1a (80 Gew.-% in Butylacetat) | 700,0 g |
| 2 | Acrylatharz-Vorprodukt 1b (60 Gew.-% in Butylacetat) | 400,0 g |
| 3 | Propylenglykol-n-Butylether | 65,0 g |
| 4 | Ammoniak 25 Gew.-% in Wasser | 40,0 g |
| 5 | Wasser | 830,0 g |
| 6 | Ammoniak 25 Gew.-% in Wasser | 2,0 g |
| 7 | Wasser | 20,0 g |

Die Ausgangsstoffe 1 und 2 wurden zusammen unter Rühren auf 200°C erhitzt, wobei ein Teil des Butylacetats abdestilliert und über den Wasserabscheider dem System entzogen wurde, sodass sich schließlich Rückfluss bei 200°C einstellte. Ziel war es, die Reaktionsmischung so lange bei dieser Temperatur zu halten, bis die Säurezahl des Ansatzes (bezogen auf den nicht-flüchtigen Anteil) auf 40 - 45 gKOH/kg gefallen war. Bei Erreichen einer Säurezahl von 44 gKOH/kg wurde die Mischung auf 140°C gekühlt. Dann wurde Vakuum angelegt und das Butylacetat weitgehend abdestilliert, sodass das sich ergebende acrylatmodifizierte Alkydharz in diesem Stadium einen nicht-flüchtigen Anteil von ca. 99 Gew.-% aufwies. Dann wurde weiter gekühlt auf 110°C und Ausgangsstoff 3 zugegeben.

Bei 70°C wurde dann mit Ausgangsstoff 4 neutralisiert. Anschließend wurde Ausgangsstoff 5 innerhalb eines Zeitraums von ca. 15 Minuten zugegeben, sodass die Kolben-Innentemperatur nicht unter 55°C fiel. Zum Homogenisieren ließ man noch 60 Minuten bei ca. 60°C rühren, kühlte dann weiter auf Raumtemperatur und stellte mit den Ausgangsstoffen 6 und 7 auf einen nicht-flüchtigen Anteil von 45 Gew.-% und einen pH-Wert von 8,1 ein.

Dabei ist die Messung des pH-Werts gemäß DIN ISO 976 durchgeführt worden, nach einer Verdünnung des Harzes mit Wasser auf einen nicht-flüchtigen Anteil von 10 Gew.-%. Das filtrierte Harz wurde zur weiteren Aufbewahrung und zur Verarbeitung in Lacken in ein verschließbares Polyethylen-Gebinde gefüllt.

### Beispiel 2a: Herstellung des hydroxylgruppenhaltigen Alkydharzes 2a) als Vorprodukt für das acrvlatmodifizierte Alkydharz 2c):

Das hydroxylgruppenhaltige Alkydharz 2a) wurde gemäß dem Verfahren wie in Beispiel 1a beschrieben hergestellt, es wurden lediglich andere Ausgangsstoffe eingesetzt. Diese waren:

| | | |
|---|---|---|
| 1 | Baumwollsaatöl-Fettsäure | 523,3 g |
| 2 | Benzoesäure | 116,3 g |
| 3 | Trimethylolpropan | 538,3 g |
| 4 | Phthalsäureanhydrid | 407,0 g |
| 5 | Tetrahydro-Phthalsäureanhydrid | 127,9 g |
| 6 | Triphenylphosphit | 1,0 g |
| 7 | Butylacetat | 400 g |

Die Säurezahl des auf einen nicht-flüchtigen Anteil von 80,0 Gew.-% eingestellten Alkydharzes betrug 6 gKOH/kg, die Hydroxylzahl 80 gKOH/kg.

### Beispiel 2b: Herstellung des Acrylatharzes 2b) als Vorprodukt für das acrylatmodifizierte Alkydharz 2c):

Das Acrylatharz 2b) wurde gemäß dem Verfahren wie in Beispiel 1b beschrieben hergestellt, es wurden lediglich andere Ausgangsstoffe eingesetzt. Diese waren:

| | | |
|---|---|---|
| 1 | Fettsäuren-Mischung | 376,6 g |
| 2 | Butylacetat | 58,2 g |
| 3 | t-butyl-Perbenzoat | 55,2 g |
| 4 | n-Butylmethacrylat | 98,0 g |
| 5 | iso-Butylmethacrylat | 251,2 g |
| 6 | Methacrylsäure | 193,0 g |
| 7 | Butylacetat | 17,6 g |
| 8 | Dodecylmercaptan | 1,5 g |
| 9 | Butylacetat | 80 g |
| 10 | t-Butyl-Perbenzoat | 6,0 g |
| 11 | Butylacetat | 500 g |

Die Fettsäuren-Mischung 1 in diesem Beispiel bestand aus Safloröl-Fettsäure (85 Gew.-%) und Rizinen-Fettsäure (15 Gew.-%). Die Säurezahl des auf einen nichtflüchtigen Anteil von 60,0 Gew.-% eingestellten Acrylatharzes betrug 209 gKOH/kg.

### Beispiel 2c: Herstellung des Acrylat-modifizierten Alkydharzes 2c) aus dem Alkydharz 2a) und dem Acrylatharz 2b):

Die Fertigung des acrylatmodifizierten Alkydharzes 2c aus dem Alkydharz 2a) und dem Acrylatharz 2b) erfolgte analog zum Verfahren zur Herstellung des Acrylatmodifizierten Alkydharzes 1c) wie in Beispiel 1c beschrieben. Die verwendeten Ausgangsstoffe waren:

| | | |
|---|---|---|
| 1 | Alkydharz-Vorprodukt 2a (80 % in Butylacetat) | 715,0 g |
| 2 | Acrylatharz-Vorprodukt 2b (60 % in Butylacetat) | 380,0 g |
| 3 | Propylenglykol-n-Butylether | 65,0 g |
| 4 | Ammoniak 25% | 40,0 g |
| 5 | Wasser | 830,0 g |
| 6 | Ammoniak 25% | 2,0 g |
| 7 | Wasser | 20,0 g |

Die Reaktion wurde mit Erreichen einer Säurezahl von 41gKOH/kg abgebrochen, indem gekühlt wurde.

Das Endprodukt wies einen nicht-flüchtigen Anteil von 45,0 Gew.-% auf. Der pH-Wert gemäß DIN ISO 976 einer wässrigen Verdünnung (mit 10 Gew.-% nichtflüchtigem Anteil) wurde zu 8,3 bestimmt.

## Patentansprüche

1. Verfahren zur Herstellung von acrylatmodifiziertem Alkydharz, umfassend die folgenden Schritte:
Bereitstellen einer Reaktionsmischung mit einer Säurezahl von größer 55, vorzugsweise größer 70 gKOH/kg, enthaltend
a) hydroxylgruppenhaltiges Alkydharz mit einer Säurezahl von kleiner 15 g KOH/kg und einer Hydroxylzahl von 30 bis 200 g KOH/kg, vorzugsweise 50 bis 160 g KOH/kg,
b) Acrylatharz, das eine Säurezahl von 130 bis 260, vorzugsweise 190 bis 220 g KOH/kg, aufweist und
c) 2 bis 15 Gew.-%, vorzugsweise 4 bis 8 Gew.-%, eines nicht aromatischen Esters mit einem Siedepunkt von kleiner 200°C, vorzugsweise kleiner 180°C, bei Normdruck als Lösungsmittel und Schleppmittel, vorzugsweise Butylacetat oder Butylpropionat,
Umsetzen der Reaktionsmischung bei einer Temperatur von 170 bis kleiner 220 °C unter Erhalt des acrylatmodifizierten Alkydharzes mit
• einer relativ um mindestens 5 Einheiten, vorzugsweise um mindestens 10, insbesondere mindestens 20, gegenüber der Reaktionsmischung reduzierten Säurezahl und
• einer absoluten Säurezahl von kleiner 65 g KOH/kg, vorzugsweise kleiner 50 g KOH/kg und insbesondere bevorzugt größer 30 bis kleiner 45 g KOH/kg, durch Veresterung unter Azeotropdestillation des Esters,
wobei die angegebene Säurezahl bzw. Hydroxylzahl sich jeweils auf die nichtflüchtigen Bestandteile des Harzes bzw. der Harze bezieht.

2. Verfahren nach Anspruch 1, **dadurch gekennzeichnet, dass** das hydroxylgruppenhaltige Alkydharz nach dem Fettsäureverfahren oder dem Triglyceridverfahren und Veresterung unter Anwendung des Schmelzverfahrens erhältlich ist.

3. Verfahren nach einem der Ansprüche 1 oder 2, **dadurch gekennzeichnet, dass** das hydroxylgruppenhaltige Alkydharz erhältlich ist durch Umsetzung von zumindest
(a) einem oder meheren Polyolen mit im Mittel größer 2 bis 6 HydroxylGruppen, vorzugsweise Neopentylglykol, Glycerin, Pentaerythrit, und/oder Trimethylolpropan,
(b) einer oder mehrerer Di- oder Tricarbonsäure-Verbindung, insbesondere ortho-Phthalsäure, ortho-Phthalsäureanhydrid, Tetrahydrophthalsäureanhydrid oder Isophthalsäure, und
(c) einer oder mehrerer ungesättigter, nicht cyclischer, aliphatischer Monocarbonsäure-Verbindungen mit 5 bis 22 Kohlenstoffatomen im Säurerest, und ggf. zusätzlich oder alternativ zu (c) mit (d) einer oder mehrerer gesättigter, nicht cyclischer aliphatischer Monocarbonsäure-Verbindungen mit 5 bis 22 Kohlenstoffatomen im Säurerest und/oder einer aromatischen oder cycloaliphatischen Monocarbonsäure-Verbindung, insbesondere Benzoesäure, oder deren Mischungen.

4. Verfahren nach Anspruch 3, **dadurch gekennzeichnet, dass** die ungesättigte Monocarbonsäure-Verbindung und/oder die gesättigte Monocarbonsäure-Verbindung ausgewählt ist aus einem oder mehreren Mitgliedern der Gruppe umfassend: Caprylsäure, Caprinsäure, Laurinsäure, Myristinsäure, Palmitinsäure, Stearinsäure, Ölsäure, Linolsäure, Linolensäure, Eleostearinsäure, Ricinolsäure, Arachinsäure; Kastoröl, dehydratisiertem Kastoröl, Baumwollsaatöl, Rapsöl, Kokosnussöl, Leinsamenöl, Olivenöl, Palmöl, Erdnussöl, Diestelöl, Sojaöl, Sonnenblumenöl, Tallöl und Tungöl.

5. Verfahren nach einem der vorhergehenden Ansprüche, **dadurch gekennzeichnet, dass** das Acrylatharz durch Copolymerisation von (Meth)acrylsäure(C1- bis C8-)alkylester, insbesondere (Meth)acrylsäure-methylester, (Meth)acrylsäurebutylester und/oder (Meth)acrylsäureethylhexyl- ester, mit zumindest einem sauren vinylischen Monomer, insbesondere mit (Meth)acrylsäure und ggf. zusätzlich mit ungesättigten Carbonsäuren, und ggf. mit Styrol, Vinyltoluol, Methylstyrol und/oder Vinylester, insbesondere Vinylacetat, herstellbar ist.

6. Verfahren nach Anspruch 5, wobei die ungesättigte Carbonsäure einfach oder mehrfach ungesättigt ist, vorzugsweise zweifach oder dreifach, ggf mit. konjugierten Doppelbindungen, und wobei die ungesättigte Carbonsäure vorzugsweise ausgewählt ist aus ein oder mehreren Mitgliedern der Gruppe Ölsäure, Linolsäure, Linolensäure, Eleostearinsäure und Ricinenfettsäure.

7. Verfahren nach einem der vorhergehenden Ansprüche, **dadurch gekennzeichnet, dass** der Ester die Formel R¹-OOC-R² aufweist, wobei R¹ ein verzweigter oder unverzweigter, aliphatischer oder cycloaliphatischer Alkylrest mit 1 bis 6 Kohlenstoffatomen, und vorzugsweise ein verzweigter oder unverzweigter aliphatischer Alkylrest mit 3 bis 5 Kohlenstoffatomen ist, und wobei R² ein verzweigter oder unverzweigter, aliphatischer oder cycloaliphatischer Alkylrest mit 1 bis 5 Kohlenstoffatomen, und vorzugsweise ein verzweigter oder unverzweigter aliphatischer Alkylrest mit 2 bis 4 Kohlenstoffatomen ist, und wobei der Ester insbesondere Butylacetat oder Butylpropionat ist.

8. Verfahren nach einem der vorhergehenden Ansprüche, **dadurch gekennzeichnet, dass** das hydroxylgruppenhaltige Alkydharz und das Acrylatharz in der Reaktionsmischung in einem Gewichtsverhältnis von 4: 1 bis 1: 1, vorzugsweise von 3: 1 bis 1,5 : 1, insbesondere 3:1 bis 2: 1, zur Umsetzung gebracht werden, bezogen auf die nichtflüchtigen Bestandteile der Harze.

9. Verfahren nach einem der vorhergehenden Ansprüche, **dadurch gekennzeichnet, dass** die Veresterung durch Abkühlung der Reaktionsmischung unter Erhalt des acrylatmodifizierten Alkydharzes gestoppt wird, vorzugsweise durch Abkühlung auf eine Temperatur von unter 140°C, insbesondere unter 120 °C.

10. Verfahren nach einem der vorhergehenden Ansprüche, **dadurch gekennzeichnet, dass** das Verfahren das teilweise Entfernen des Esters, vorzugsweise durch Destillation, auf einen Gehalt von 0,1 bis 3 Gew.-% Ester im acrylatmodifizierten Alkydharz, bezogen auf die nichtflüchtigen Bestandteile des acrylatmodifizierten Alkydharzes, umfasst.

11. Verfahren nach einem der vorhergehenden Ansprüche, wobei das Verfahren den Schritt der Neutralisierung des acrylatmodifizierten Alkydharzes mit Base umfasst, vorzugsweise durch Umsetzung des Alkydharzes mit (1 +/-0,2) Äquivalent Base.

12. Verfahren nach Anspruch 11, **dadurch gekennzeichnet, dass** als Base
(a) Hydroxidsalz, vorzugsweise Natriumhydroxid oder Kaliumhydroxid, oder
(b) Amin, vorzugsweise 2-(Dimethylamino)-ethanol, 3-(Dimethylamino)-propanol-2, 2-(Diethylamino)-ethanol, 3-(Diethylamino)-propanol-2 oder 3-(Diethylamino)-propanol-1, oder
(c) Ammoniak eingesetzt wird.

13. Verfahren nach Anspruch 11 oder 12, **dadurch gekennzeichnet, dass** das Verfahren weiterhin die Zugabe von Wasser zum acrylatmodifizierten Alkydharz umfasst, vorzugsweise unter Einstellung eines nichtflüchtigen Anteils der sich ergebenden wässrigen Lösung und/oder Dispersion von 30 bis 70 Gew.-%, insbesondere 40 bis 50 Gew.-%.

14. Verfahren nach Anspruch 13, **dadurch gekennzeichnet, dass** die Lösung und/oder Dispersion nach Verdünnung mit Wasser auf einen Festgehalt von 10 Gew.% einen pH-Wert bei 20 °C von 6 bis 10, vorzugsweise 7 bis 9, insbesondere 7,5 bis 8,7, aufweist.

15. Verfahren nach einem der vorhergehenden Ansprüche, **dadurch gekennzeichnet, dass** das acrylatmodifizierte Alkydharz weiterhin einen oder mehrere Lösungsvermittler umfasst, ausgewählt aus der Gruppe bestehend aus Butoxypropanol, Butoxyethanol, Ethoxyethoxyethanol, Butoxyethoxyethanol, Propoxyethoxyethanol, Ethoxyethanol, Dimethylsulfon, Methoxypropanol, Dimethylsulfoxyd und n-Butanol und seinen Isomeren, und insbesondere Butoxypropanol ist, vorzugsweise in einer Menge von 0,1 bis 20, insbesondere 1 bis 10 Gew.%, Lösungsvermittler bezogen auf die nichtflüchtigen Bestandteile des acrylatmodifizierten Alkydharzes und der Lösungsvermittler vorzugsweise vor dem Schritt der Neutralisierung zugegeben wird.

16. Acrylatmodifiziertes Alkydharz, herstellbar gemäß einem Verfahren nach einem der Ansprüche 1 bis 15 entfalten, wobei das acrylatmodifizierte Alkydharz den nicht aromatischen Ester mit einem Siedepunkt von kleiner 200°C bei Normdruck mit einem Gehalt von 0,1 bis 3 Gew.-% enthält, bezogen auf die nichtflüchtigen Bestandteile des acrylatmodifizierten Alkydharzes.

17. Verwendung des acrylatmodifizierten Alkydharzes gemäß Anspruch 16 als Bindemittel in wasserverdünnbaren Lacken oder als Bindemittel in Druck- und Schreibtinten.

## Claims

1. A method for the preparation of acrylate-modified alkyd resin, comprising the following steps:
preparing a reaction mixture with an acid value of greater than 55, preferably greater than 70g KOH/kg, containing
a) hydroxyl group-containing alkyd resin with an acid value of less than 15 g KOH/kg and a hydroxyl value of 30 to 200 g KOH/kg, preferably 50 to 160 g KOH/kg,
b) acrylate resin with an acid value of 130 to 260, preferably 190 to 220 g KOH/kg, and
c) 2 to 15% by weight, preferably 4 to 8% by weight, of a non-aromatic ester with a boiling point of less than 200°C, preferably less than 180°C, at standard pressure as a solvent and entrainer, preferably butyl acetate or butyl propionate,
reacting the reaction mixture at a temperature of 170°C to less than 220°C to obtain acrylate-modified alkyd resin with
• an acid value that is reduced by at least 5 units, preferably by at least 10 units, in particular at least 20 units, relative to the reaction mixture, and
• an absolute acid value of less than 65 g KOH/kg, preferably less than 50 g KOH/kg and in particular preferably greater than 30 to less than 45 g KOH/kg, by means of esterification by azeotropically distilling the ester,
wherein the disclosed acid value or respectively hydroxyl value respectively relate to the non-volatile components of the resin or respectively resins.

2. The method according to claim 1, **characterized in that** the hydroxyl group-containing alkyd resin can be obtained by the fatty acid process or the triglyceride process and by esterification using the melting process.

3. The method according to one of claims 1 and 2, **characterized in that** the hydroxyl group-containing alkyd resin can be obtained by reacting at least
a) one or more polyols having an average of more than 2 to 6 hydroxyl groups, preferably neopentyl glycol, glycerin, pentaerythritol and/or trimethylolpropane,
b) one or more di- or tricarboxolic acid compounds, in particular ortho-phthalic acid, ortho-phthalic acid anhydride, tetrahydrophthalic acid anhydride or isophthalic acid, and
c) one or more unsaturated, non-cyclic, aliphatic monocarboxylic acid compounds with 5 to 22 carbon atoms in the acid radical and, if appropriate, additionally or alternatively to (c) with (d) one or more saturated, non-cyclic aliphatic monocarboxylic acid compounds with 5 to 22 carbon atoms in the acid radical and/or an aromatic or cycloaliphatic monocarboxylic acid compound, in particular benzoic acid, or mixtures thereof.

4. The method according to claim 3, **characterized in that** the unsaturated monocarboxylic acid compound and/or the saturated monocarboxylic acid compound is selected from one or more members of the group comprising: caprylic acid, capric acid, lauric acid, myristic acid, palmitic acid, stearic acid, oleic acid, linoleic acid, linolenic acid, eleostearic acid, ricinoleic acid, arachidic acid, castor oil, dehydrated castor oil, cottonseed oil, rapeseed oil, coconut oil, linseed oil, olive oil, palm oil, peanut oil, thistle oil, soy bean oil, sunflower oil, tall oil and tung oil.

5. The method according to one of the preceding claims, **characterized in that** the acrylate resin can be produced by the copolymerization of (meth)acrylic acid(C1- to C8-alkyl ester, in particular (meth)acrylic acid-methyl ester, (meth)acrylic acid butylester and/or (meth)acrylic acid ethylhexyl ester, with at least one acidic vinyl monomer, in particular with (meth)acrylic acid and, if appropriate, additionally with unsaturated carboxylic acids and, if appropriate, with styrene, vinyl toluene, methyl styrene and/or vinyl ester, in particular vinyl acetate.

6. The method according to claim 5, wherein the unsaturated carboxylic acid is monounsaturated or polyunsaturated, preferably diunsaturated or triunsaturated, where possible with conjugated double bonds, and wherein the unsaturated carboxylic acid is preferably selected from one or more members of the group oleic acid, linoleic acid, linolenic acid, eleostearic acid and ricinoleic fatty acid.

7. The method according to one of the preceding claims, **characterized in that** the ester has the formula R¹-OOC-R², where R¹ is a branched or unbranched aliphatic or cycloaliphatic alkyl radical with 1 to 6 carbon atoms, and preferably a branched or unbranched aliphatic alkyl radical with 3 to 5 carbon atoms, and where R² is a branched or unbranched aliphatic or cycloaliphatic alkyl radical with 1 to 5 carbon atoms, and preferably a branched or unbranched aliphatic alkyl radical with 2 to 4 carbon atoms, and wherein the ester is in particular butyl acetate or butyl propionate.

8. The method according to one of the preceding claims, **characterized in that** the hydroxyl group-containing alkyd resin and the acrylate resin are brought to reaction in the reaction mixture in a weight ratio of 4:1 to 1:1, preferably 3:1 to 1.5:1, in particular 3:1 to 2:1, based on the non-volatile components of the resins.

9. The method according to one of the preceding claims, **characterized in that** the esterification is halted by cooling the reaction mixture to obtain the acrylate-modified alkyd resin, preferably by cooling to a temperature below 140°C, in particular below 120°C.

10. The method according to one of the preceding claims, **characterized in that** the method includes the partial removal of the ester, preferably by distillation, to a content to 0.1 to 3% by weight ester in the acrylate-modified alkyd resin, based on the non-volatile components of the acrylate-modified alkyd resin.

11. The method according to one of the preceding claims, wherein the method includes the step of neutralizing the acrylate-modified alkyd resin with base, preferably by reacting the alkyd resin with (1 +/-0.2) equivalent base.

12. The method according to claim 11, **characterized in that**
a) hydroxide salt, preferably sodium hydroxide or potassium hydroxide, or
b) amine, preferably 2-(dimethylamino)-ethanol, 3-(dimethylamino)-propanol-2, 2-(diethylamino)-ethanol, 3-(diethylamino)-propanol-2 or 3-(diethylamino)-propanol-1, or
c) ammonia is used as the base.

13. The method according to claim 11 or 12, **characterized in that** the method further includes the addition of water to the acrylate-modified alkyd resin, preferably while adjusting a non-volatile proportion of the resulting aqueous solution and/or dispersion of 30 to 70% by weight, in particular 40 to 50% by weight.

14. The method according to claim 13, **characterized in that**, after dilution with water to a solid content of 10% by weight, the solution and/or dispersion has a pH value at 20°C of 6 to 10, preferably 7 to 9, in particular 7.5 to 8.7.

15. The method according to one of the preceding claims, **characterized in that** the acrylate-modified alkyd resin further comprises one or more solubilizers selected from the group consisting of butoxy propanol, butoxy ethanol, ethoxyethoxy ethanol, butoxyethoxy ethanol, propoxyethoxy ethanol, ethoxyethanol, dimethyl sulfone, methoxy propanol, dimethyl sulfoxide and n-Butanol and its isomers, and in particular butoxy propanol, preferably in an amount of 0.1 to 20% by weight, in particular 1 to 10% by weight, solubilizers based on the non-volatile components of the acrylate-modified alkyd resin, and the solubilizers are preferably added before the neutralization step.

16. An acrylate-modified alkyd resin that can be prepared by a method according to one of claims 1 through 15, wherein the acrylate-modified alkyd resin contains the non-aromatic ester with a boiling point of less than 200°C at standard pressure with a content of 0.1 to 3% by weight, based on the non-volatile components of the acrylate-modified alkyd resin.

17. A use of the acrylate-modified alkyd resin according to claim 16 as a binding agent in water-dilutable coatings or as a binding agent in printing and writing inks.

## Revendications

1. Procédé de fabrication d'une résine alkyde modifiée par acrylate, comportant les étapes suivantes :
- fourniture d'un mélange réactionnel ayant un indice d'acide de plus de 55, de préférence de plus de 70 g KOH/kg, contenant
a) une résine alkyde à teneur en groupe hydroxyle ayant un indice d'acide de moins de 15 g KOH/kg et un indice d'hydroxyle de 30 à 200 g KOH/kg, de préférence de 50 à 160 gKOH/kg ;
b) une résine d'acrylate, qui présente un indice d'acide de 130 à 260, de préférence de 190 à 220 g KOH/kg ; et
c) 2 à 15 % en poids, de préférence 4 à 8 % en poids, d'un ester non aromatique ayant un point d'ébullition de moins de 200 °C, de préférence de moins de 180 °C, à pression normale en tant que solvant et agent d'entraînement, de préférence l'acétate de butyle ou le propionate de butyle ;
- réaction du mélange réactionnel à une température de 170 à moins de 220°C pour obtenir la résine alkyde modifiée par acrylate ayant
• un indice d'acide relativement réduit d'au moins 5 unités, de préférence d'au moins 10, en particulier d'au moins 20, par rapport au mélange réactionnel ; et
• un indice d'acide absolu de moins de 65 g KOH/kg, de préférence de moins de 50 g KOH/kg et de façon particulièrement préférée de plus de 30 à moins de 45 g KOH/kg, par estérification sous distillation azéotropique de l'ester,
l'indice d'acide indiqué ou l'indice d'hydroxyle indiqué se rapportant chacun aux composants non volatils de la résine ou des résines.

2. Procédé selon la revendication 1, **caractérisé par le fait que** la résine alkyde à teneur en groupe hydroxyle est susceptible d'être obtenue par le procédé aux acides gras ou le procédé aux triglycérides et l'estérification au moyen du procédé de fusion.

3. Procédé selon l'une des revendications 1 ou 2, **caractérisé par le fait que** la résine alkyde à teneur en groupe hydroxyle est susceptible d'être obtenue par réaction d'au moins
(a) un ou plusieurs polyols ayant en moyenne plus de 2 à 6 groupes hydroxyle, de préférence le néopentylglycol, le glycérol, le pentaérythritol et/ou le triméthylolpropane ;
(b) un ou plusieurs composés d'acide di- ou tricarboxylique, en particulier l'acide orthophtalique, l'anhydride d'acide orthophtalique, l'anhydride d'acide tétrahydrophtalique ou l'acide isophtalique ; et
(c) un ou plusieurs composés d'acide monocarboxylique aliphatiques, non cycliques, insaturés, ayant 5 à 22 atomes de carbone dans le reste acide, et le cas échéant en plus de ou comme alternative à (c) avec (d) un ou plusieurs composés d'acide monocarboxylique aliphatiques, non cycliques, saturés, ayant 5 à 22 atomes de carbone dans le reste acide et/ou un composé d'acide monocarboxylique aromatique ou cycloaliphatique, en particulier l'acide benzoïque, ou leurs mélanges.

4. Procédé selon la revendication 3, **caractérisé par le fait que** le composé d'acide monocarboxylique insaturé et/ou le composé d'acide monocarboxylique saturé sont choisis parmi un ou plusieurs membres du groupe comportant : l'acide caprylique, l'acide caprique, l'acide laurique, l'acide myristique, l'acide palmitique, l'acide stéarique, l'acide oléique, l'acide linoléique, l'acide linolénique, l'acide éléostéarique, l'acide ricinoléique, l'acide arachidique ; l'huile de ricin, l'huile de ricin déshydratée, l'huile de graine de coton, l'huile de colza, l'huile de coco, l'huile de lin, l'huile d'olive, l'huile de palme, l'huile d'arachide, l'huile de chardon, l'huile de soja, l'huile de tournesol, l'huile de tall et l'huile de tung.

5. Procédé selon l'une des revendications précédentes, **caractérisé par le fait que** la résine d'acrylate est susceptible d'être obtenue par copolymérisation d'esters d'alkyle en C₁ à C₈ de l'acide (méth)acrylique, en particulier l'ester méthylique de l'acide (méth)acrylique, l'ester butylique de l'acide (méth)acrylique et/ou l'ester éthylhexylique de l'acide (méth)acrylique, avec au moins un monomère vinylique acide, en particulier avec de l'acide (méth)acrylique et le cas échéant en plus avec des acides carboxyliques insaturés, et le cas échéant avec le styrène, le vinyltoluène, le méthylstyrène et/ou les esters vinyliques, en particulier l'acétate de vinyle.

6. Procédé selon la revendication 5, dans lequel l'acide carboxylique insaturé est mono-insaturé ou polyinsaturé, de préférence di-insaturé ou tri-insaturé, le cas échéant avec des doubles liaisons conjuguées, et dans lequel l'acide carboxylique insaturé est choisi de préférence parmi un ou plusieurs membres du groupe acide oléique, acide linoléique, acide linolénique, acide éléostéarique et l'acide gras de ricin.

7. Procédé selon l'une des revendications précédentes, **caractérisé par le fait que** l'ester répond à la formule R¹-OOC-R², dans laquelle R¹ est un reste alkyle aliphatique ou cycloaliphatique, ramifié ou non ramifié, avec 1 à 6 atomes de carbone, et est, de préférence, un reste alkyle aliphatique, ramifié ou non ramifié, avec 3 à 5 atomes de carbone, et dans laquelle R² est un reste alkyle aliphatique ou cycloaliphatique, ramifié ou non ramifié, avec 1 à 5 atomes de carbone, et est, de préférence, un reste alkyle aliphatique, ramifié ou non ramifié, avec 2 à 4 atomes de carbone, et dans lequel l'ester est en particulier l'acétate de butyle ou le propionate de butyle.

8. Procédé selon l'une des revendications précédentes, **caractérisé par le fait que** la résine alkyde à teneur en groupe hydroxyle et la résine d'acrylate sont mises à réagir dans le mélange réactionnel dans un rapport en poids de 4:1 à 1:1, de préférence de 3:1 à 1,5:1, en particulier de 3:1 à 2:1, par rapport aux composants non volatils des résines.

9. Procédé selon l'une des revendications précédentes, **caractérisé par le fait que** l'estérification est stoppée par refroidissement du mélange réactionnel pour obtenir la résine alkyde modifiée par acrylate, de préférence par refroidissement à une température inférieure à 140°C, en particulier inférieure à 120°C.

10. Procédé selon l'une des revendications précédentes, **caractérisé par le fait que** le procédé comporte l'élimination partielle de l'ester, de préférence par distillation, à une teneur de 0,1 à 3 % en poids d'ester dans la résine alkyde modifiée par acrylate, par rapport aux composants non volatils de la résine alkyde modifiée par acrylate.

11. Procédé selon l'une des revendications précédentes, dans lequel le procédé comporte l'étape de la neutralisation de la résine alkyde modifiée par acrylate par une base, de préférence par réaction de la résine alkyde avec (1 +/- 0,2) équivalent de base.

12. Procédé selon la revendication 11, **caractérisé par le fait qu'**en tant que base, on utilise
(a) un sel hydroxyde, de préférence l'hydroxyde de sodium ou l'hydroxyde de potassium, ou
(b) une amine, de préférence le 2-(diméthylamino)-éthanol, le 3-(diméthylamino)-propanol-2, le 2-(diéthylamino)-éthanol, le 3-(diéthylamino)-propanol-2 ou le 3-(diéthylamino)-propanol-1, ou
(c) l'ammoniac.

13. Procédé selon l'une des revendications 11 ou 12, **caractérisé par le fait que** le procédé comporte en outre l'addition d'eau à la résine alkyde modifiée par acrylate, de préférence sous ajustement d'une teneur non volatile de la solution et/ou dispersion aqueuse résultante de 30 à 70 % en poids, en particulier de 40 à 50 % en poids.

14. Procédé selon la revendication 13, **caractérisé par le fait que** la solution et/ou la dispersion présente, après dilution avec de l'eau à une teneur en matières solides de 10 % en poids, une valeur de pH à 20°C de 6 à 10, de préférence de 7 à 9, en particulier de 7,5 à 8,7.

15. Procédé selon l'une des revendications précédentes, **caractérisé par le fait que** la résine alkyde modifiée par acrylate comporte en outre un ou plusieurs agents solubilisants, choisis dans le groupe constitué par le butoxypropanol, le butoxyéthanol, l'éthoxyéthoxyéthanol, le butoxyéthoxyéthanol, le propoxyéthoxyéthanol, l'éthoxyéthanol, la diméthylsulfone, le méthoxypropanol, le diméthylsulfoxyde et le n-butanol et ses isomères, et en particulier est le butoxypropanol, de préférence dans une quantité de 0,1 à 20, en particulier de 1 à 10 % en poids, d'agent(s) solubilisant(s) par rapport aux composants non volatils de la résine alkyde modifiée par acrylate et l'agent de solubilisation est, de préférence, ajouté avant l'étape de neutralisation.

16. Résine alkyde modifiée par acrylate, susceptible d'être obtenue par un procédé selon l'une des revendications 1 à 15, la résine modifiée par acrylate contenant l'ester non aromatique avec un point d'ébullition de moins de 200°C à pression normale avec une teneur de 0,1 à 3 % en poids, par rapport aux composants non volatils de la résine alkyde modifiée par acrylate.

17. Utilisation de la résine alkyde modifiée par acrylate selon la revendication 16 comme liant dans des laques diluables à l'eau ou comme liant dans des encres d'impression ou d'écriture.
